(19) Europäisches Patentamt
European Patent Office
Office européen des brevets

(11) **EP 4 092 979 B1**

(12) **EUROPEAN PATENT SPECIFICATION**

(45) Date of publication and mention
of the grant of the patent:
**07.06.2023   Bulletin 2023/23**

(21) Application number: **22152271.7**

(22) Date of filing: **19.01.2022**

(51) International Patent Classification (IPC):
***H04L 27/18*** *(2006.01)*      *H04L 27/22* *(2006.01)*

(52) Cooperative Patent Classification (CPC):
**H04L 27/183**; H04L 27/22

(54) **APPARATUS AND METHOD FOR MAXIMIZATION OF DATA THROUGHPUT FOR BLUETOOTH IN DEPENDENCE OF THE PERFORMANCE OF THE TRANSMITTER OF A COUNTER STATION**

VORRICHTUNG UND VERFAHREN ZUR MAXIMIERUNG DES DATENDURCHSATZES FÜR BLUETOOTH IN ABHÄNGIGKEIT VON DER LEISTUNG DES SENDERS EINER GEGENSTATION

APPAREIL ET PROCÉDÉ PERMETTANT DE MAXIMISER LE DÉBIT DE DONNÉES POUR BLUETOOTH EN FONCTION DE LA PERFORMANCE DE L'ÉMETTEUR D'UNE STATION ANTAGONISTE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.05.2021   EP 21174362**

(43) Date of publication of application:
**23.11.2022   Bulletin 2022/47**

(73) Proprietor: **Shenzhen Goodix Technology Co., Ltd. Shenzhen, Guangdong 518045 (CN)**

(72) Inventor: **Bury, Andreas Gerhard**
**01099 Dresden (DE)**

(74) Representative: **Lippert Stachow Patentanwälte Rechtsanwälte
Partnerschaft mbB
Krenkelstraße 3
01309 Dresden (DE)**

(56) References cited:
**US-B1- 10 389 486      US-B2- 9 722 845**

**Description**

The invention discloses an apparatus for maximization of data throughput for Bluetooth or Bluetooth Low Energy in dependence of the performance of a transmitter of a counter station, the apparatus is configured to receive a radio frequency signal (RF signal), comprising means to down convert the RF signal to a baseband signal (BB signal), a demodulation and detection unit configured to demodulate and detect received information bits of the BB signal and a link control unit configured to control communication link specific parameters and to feed the received information bits to higher layers.

The invention also discloses a method for maximization of data throughput for Bluetooth or Bluetooth Low Energy in dependence of the performance of a transmitter of a counter station using the inventive apparatus.

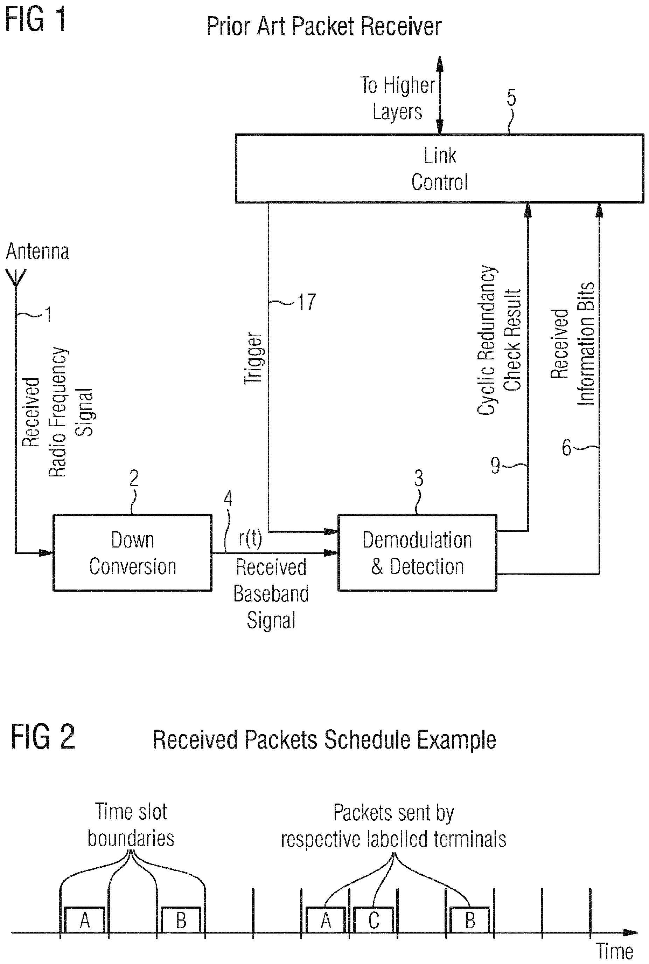

Generally, a receiver of a modem utilizes a single parameter estimation and demodulation path with fixed parameter settings to decide upon received data. By choice of architecture and parameterization, it performs well when receiving signal packets from a so-called "dirty" transmitter, which inherently delimits the performance when receiving signals from a "clean" transmitter, compared to theoretical limits. Figure 1 shows a known-art packet receiver which comprises a down conversion unit 2 configured to down convert a received radio frequency (RF) signal 1, a demodulation and detection unit 3 configured to demodulate the received baseband signal 4 and to detect received information bits 6 that are passed to a link control unit 5, which itself triggers the demodulation and detection unit 3. A transmitter in a modem for wireless data transfer according to the Bluetooth (BT) or Bluetooth Low Energy (BLE) standard (see "Bluetooth Core Specification, Rev 5.2, Bluetooth Special Interest Group, 2019-12-31") may behave "dirty", which implies that its carrier frequency may exhibit an oscillation over the duration of a transmitted packet. The standard, referenced above, defines limits for the time-varying offset from nominal carrier frequency as well as a worst-case transmitter model with sinusoidal frequency modulation of a certain amplitude and period. Transmitter implementations may perform as bad as defined, or better. This gives room for low-complexity / low-cost transmitter implementations compromising throughput performance. An advanced transmitter implementation may, however, behave totally "clean" in this respect, meaning that its carrier frequency may be regarded as stable for the duration of a packet, limited only by phase noise of the local oscillator, which may not harm the transmission. The Bluetooth test specification defines receiver performance tests using the defined worst case "dirty" transmitter, see "Radio Frequency Bluetooth Test Suite, Rev. RF.TS.p30 edition 2, Bluetooth Special Interest Group, 2020-01-27."

US 10 389 486 B1 (LI YAN [US] ET AL) 20 August 2019 and US 9 722 845 B2 (INTEL IP CORP [US]) 1 August 2017 disclose dirty demodulators for BT and BLE.

The requirement to support a "dirty" transmitter has impact on the design choices made in a receiver implementation. A receiver optimized for a "clean" transmitter might not be able to receive successfully any packet from a "dirty" transmitter. On the other hand, a receiver optimized for a "dirty" transmitter will still be able to receive from a "clean" transmitter, however, at some increase of error probability compared to theoretical limits.

This lack of error rate optimality when receiving packets from a "clean" transmitter using a receiver optimized for a "dirty" transmitter is particularly pronounced in Bluetooth Enhanced Data Rate operating modes, which utilize a serial differential phase shift keying (DPSK) transmission scheme.

Use cases with no line-of sight between two communicating BT or BLE modems, such as transmission between a mobile phone kept in a pocket, and ear-buds plugged into a person's ears, demand the least possible link loss. Developers can achieve this by implementing a clean transmitter on one side, and a receiver making best use of the clean signal on the other side. However, the receiver must still support "dirty" transmitters well. Thus, there is demand for receivers performing best with either "dirty" or "clean" transmitters.

Furthermore, BT or BLE devices may wirelessly communicate with one or several BT or BLE enabled devices simultaneously, using time multiplexing as well as frequency multiplexing. The devices, possibly from different vendors, may exhibit varying qualities with respect to "dirty" or "clean" transmitters.

Further common requirements on battery-powered devices for mass-market applications are low cost as well as low power consumption. They convert into the need for small hardware structures and low implementation complexity.

Thus, it is the objective of the present invention to present an apparatus and a method for maximization of data throughput for Bluetooth standards (BT and BLE) in dependence of the performance of a transmitter of a counter station. This means that the receiver performance shall be pushed by reducing the error rate when receiving packets from a clean transmitter, assuming operation at a certain signal-to-noise ratio, where the noise is thermal noise from the radio frontend.

The objective of the invention will be solved by an apparatus according to independent claim 1.

The apparatus is configured to receive a radio frequency signal (RF signal) and comprises means to down convert the RF signal to a baseband signal (BB signal), a demodulation and detection unit configured to demodulate and detect received information bits of the BB signal and a link control unit configured to control communication link specific parameters and to feed the received information bits to higher layers. According to the invention the demodulation and detection unit is configurable and configured to adapt filter bandwidths according to a time-varying instantaneous

frequency offset estimation $\widetilde{f(k)}$ of the BB signal $r(t)$ and the apparatus further comprises a packet assessment unit configured to classify a packet received from the BB signal and detected and demodulated by the demodulation and detection unit as dirty or clean by comparing an evaluation value $d$ obtained from instantaneous frequency offset estimates $\widetilde{f(k)}$ during reception of the packet against a threshold T and a configuration control unit configured to maintain an assessment history respectively per counter station connected with the apparatus in respective communication links and to convert said history into a verdict $v$ on whether a specific counter station transmits packets regarded as clean or dirty, whereas said verdict controls the configurable demodulation and detection unit when receiving the packet from the specific counter station.

Bluetooth subdivides the time axis for receiving packets of a BB signal from a counter station into slots, and a packet may occupy one or more slots. Within a Bluetooth pico-net there is one master and multiple slaves, where the master defines the slot grid. A slave in one pico-net may be at the same time the master of another pico-net. The assessment of "clean" or "dirty" packets is a property of respective transmitters, which typically does not change over time. In many scenarios, a BT/BLE receiver expects to receive packets from certain/specific/special counter stations at certain time slots. Figure 2 shows an example for a reception scheduling. Packets labelled with 'A', 'B' or 'C' were sent by respective counter stations 'A', 'B' or 'C'.

It is known that a receiver has two configurations, one optimized to receive packets from a "dirty" transmitter at lowest possible error rate and another one optimized to receive packets from a "clean" transmitter at lowest possible error rate. The receiver may support the lowest error rate in all cases, provided that it has knowledge of whether a specific counter station possesses a "clean" or "dirty" transmitter, and assuming that it knows the identity of the counter station prior to receiving a packet. The inventive apparatus provides such knowledge, because it has built-in means to assess received packets, and to decide whether they are "dirty" or "clean". These means will be explained below.

For each counter station that can communicate with the receiver, the receiver maintains a history of "clean" / "dirty" / "undefined" assessments, whereas the assessment result is defined as "undefined" if a packet was not received correctly, which is the case when the cyclic redundancy check failed. The packet assessment unit outputs an evaluation value d derived from the instantaneous frequency offset $\widetilde{f(k)}$ observed during reception of a packet. This evaluation value d is compared against a threshold $T$. The result of this comparison is an assessment value for a specific counter station, and the assessment meaning may be that the packet is either classified as "dirty" or "clean". The configuration control unit and packet assessment unit convert the history into a verdict on whether a specific counter station transmits packets regarded as "clean" or "dirty". In the sense of this invention, a verdict represents the judgement made upon a counter station based on an observed history of received packets. This verdict controls the receiver configuration when receiving a packet from a known counter station. The link control unit hands over a station index to the configuration control unit, whereas the demodulation and detection unit is triggered by the link control unit and configured by the configuration control unit with specific filter gain settings to optimally receive packets as BB-signals from either "dirty" or "clean" counter station transmitters.

In a variant of the inventive apparatus, the configurable demodulation and detection unit outputs a cyclic redundancy check (CRC) result to the configuration control unit and the link control unit and outputs the received information bits to the link control unit.

The CRC result, either "CRC passed" or "CRC failed" is used by the configuration control unit to update the history and hence the verdict of a specific counter station and add said specific counter station assessment to the memory of the configuration control unit. The memory content is organized by a station index as provided by link control unit.

In a further variant of the inventive apparatus, the packet assessment unit comprises a drift estimator unit configured to determine a maximum of an absolute drift across the received packet as evaluation value d and to compare it against the threshold T. If the maximum drift observed during a successfully received packet falls above the threshold, the associated counter station transmitter is regarded as "dirty", provided that the packet was received with successfully passing CRC check. If the maximum drift/the evaluation value is less than or equal to the threshold, the associated counter station transmitter is regarded as "clean". The value of the threshold is adjusted to maximize throughput across various counter stations exhibiting different amounts of frequency drift within their transmitted packets. So, the packet assessment unit feeds instantaneous frequency offset estimates $\widetilde{f(k)}$ into the drift estimator, which can be a differentiator filter. The drift estimator determines the maximum of the absolute drift across the received packet and compares it against the threshold T. The threshold detection classifies the received packet as "dirty" when exceeding the threshold, otherwise it is regarded a "clean" packet. The advantage of using a drift estimator unit is that this quantity directly indicates the amount of degradation caused by phase offset within the frequency offset compensation in the receiver.

In another variant of the inventive apparatus, the packet assessment unit comprises means for peak-to-peak frequency offset variation span estimation, which corresponds also to an evaluation value *d* and is configured to compare *d* against the threshold *T*. The embodiment of the packet assessment unit with means for peak-to-peak frequency offset variation span estimation has the advantage of lower implementation complexity compared to a drift estimator. Overall performance will be reduced compared to the drift estimator.

In a variant of the inventive apparatus, the configuration control unit comprises a memory for storing histories of counter station specific assessments, related CRC results and verdicts derived thereof, a history and verdict updater unit configured to derive the verdict of a specific counter station from the stored history and the assessment and CRC result of the most recently received packet of said specific counter station and to configure the demodulation and detection unit respectively.

In another variant of the inventive apparatus, the configuration control unit comprises a memory for storing histories of counter station specific assessment CRC results, a history updater configured to derive the CRC result of the specific counter station from the stored histories and a verdict computation unit configured to compute the verdict of a specific counter station when configuring the packet of a specific counter station is being received and to configure the demodulation and detection unit respectively.

For each counter station, the apparatus or in brief receiver maintains a history of "clean" / " dirty"/ "undefined" received packet assessments. The configuration control unit of the receiver converts this history into a verdict on whether a specific counter station transmits packets regarded as "clean" or "dirty". There are two versions for doing this. Either the verdict is computed already when feeding in a new assessment after receiving a packet, wherein the verdict per station along with its associated assessment and CRC history is stored in the memory, or the verdict is computed by a verdict computation unit when configuring a packet to be received and only the assessment CRC history is stored in the memory.

The configuration control unit sends a configuration selection signal to the demodulation and detection unit, so that the demodulation and detection unit can select the correct configuration for the corresponding counter station.

According to the invention, the verdict *v(m)* is computed by

$$v(m) = \begin{cases} 0 & \text{if} \quad 2 \cdot \sum_{k=m-K}^{m-1} c(k) < \sum_{k=m-K}^{m-1} g(k) \quad or \quad \sum_{k=m-K}^{m-1} g(k) = 0 \\ 1 & \text{if} \quad 2 \cdot \sum_{k=m-K}^{m-1} c(k) \geq \sum_{k=m-K}^{m-1} g(k) \end{cases},$$

where index *k* ranges over the last *K* packets received from a counter station, with *K>0*. *m* represents the index of the packet to be received from a specific counter station; *g(k)* represents the cyclic redundancy check result, serving as a distinction between good packets to be incorporated into the assessment and bad ones to be ignored, whereas *g(k)* =

$$\begin{cases} 0 & \text{if} \quad \text{"undefined"} \\ 1 & \text{if} \quad \text{CRC okay} \end{cases}$$ at the *k*-th packet received from a certain counter station;

*c(k)* represents the "dirty"/"clean" transmitter assessment of received packets, whereas

$$c(k) = \begin{cases} 0 & \text{if} \quad \text{"dirty"} \\ 1 & \text{if} \quad \text{"clean"} \end{cases}$$ at the *k*-th packet received from a certain counter station;

*v(m)* represents the verdict for receiver configuration to receive the next packet from a certain counter station,

whereas $$v(m) = \begin{cases} 0 & \text{if} \quad \text{"dirty"} \\ 1 & \text{if} \quad \text{"clean"} \end{cases}$$ is applied receiving the *m*-th packet from a certain counter station.

According to the invention, if the evaluation value *d* exceeds threshold *T* the transmitted packet is defined as dirty, and if the evaluation value d does not exceeds threshold *T* the transmitted packet is defined as clean.

In a further aspect of the invention, the verdict *v(m)* is defined as dirty for the case when the entire history of packets received by the apparatus from a counter station has been assessed undefined or for any unknown counter station.

Furthermore, the verdict and receiver configuration for any unknown counter station is "dirty".

The objective of the invention will be solved by a method according to independent claim 10 using the inventive apparatus according to claims 1 to 9.

The inventive method for maximization of the data throughput for Bluetooth or Bluetooth Low Energy in dependence of the performance of the transmitter of a counter station comprises the following steps:

- receiving a radio frequency, RF, signal from a counter station,
- down-converting the RF-signal to a BB-signal $r(t)$ and inputting it to a configurable demodulation and detection unit, whereas the demodulation and detection unit is configured by a configuration control unit and triggered by a link control unit,
- calculating and outputting a cyclic redundancy check, CRC, result to the link control unit and to the configuration control unit,
- outputting an instantaneous frequency-offset estimate $\widetilde{f(k)}$ to a packet assessment unit by the demodulation and detection unit,
- assessing a packet received from the BB-signal as dirty or clean based upon evaluating the instantaneous frequency offset estimate $\widetilde{f(k)}$ observed during reception of the packet by getting an evaluation value $d$ and comparing the evaluation value $d$ against a threshold $T$ by the packet assessment unit to distinguish a clean counter station transmitting at a stable radio frequency of the counter station transmitter from a dirty transmitter exhibiting variation of the radio frequency, and
- maintaining an assessment history of each counter station connected with the apparatus and converting said history into a verdict v on whether a specific counter station transmits packets regarded as clean or dirty, whereas said verdict is used to control the demodulation and detection unit when receiving a packet from a counter station according to a station index of the link control unit, by the configuration control unit.

The inventive receiver performing the inventive method reduces the error rate when receiving packets from a "clean" transmitter of a counter station, assuming operation at a certain signal-to-noise ratio, where the noise is thermal noise from the radio frontend. As a result, the same error rate and thus the same user experience is possible under conditions of a larger link loss, which may come from a larger distance between transmitter and receiver, or from stronger signal attenuation by an obstructed radio wave propagation path between transmitter and receiver.

The invention will be explained in more detail using exemplary embodiments.

The appended drawings show

Fig. 1    A packet receiver according to the prior art;

Fig. 2    An example for a reception scheduling of a BT/BLE receiver;

Fig. 3    A packet receiver according to the invention;

Fig. 4a    a first embodiment of a Configuration control unit according to the invention;

Fig. 4b    a second embodiment of a Configuration control unit according to the invention;

Fig. 5    Packet assessment unit according to the invention;

Fig. 6    Configurable demodulation and detection unit according to the invention;

Fig. 7    Alternative packet assessment unit according to a second embodiment;

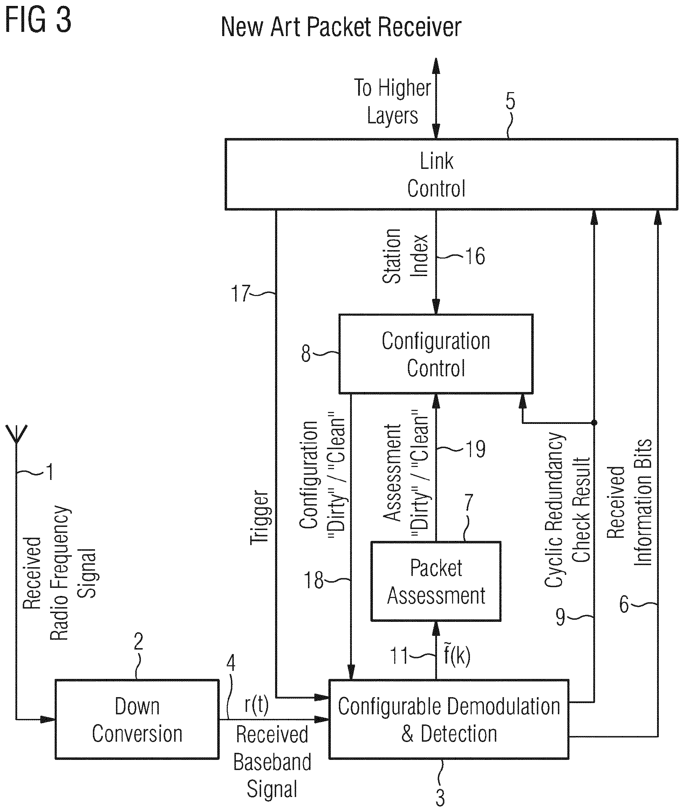

Figure 3 shows the inventive receiver, which comprises built-in means to assess received packets, and to decide upon whether they appear "dirty" or "clean". If a packet was not received correctly, which is the case when the cyclic redundancy check (CRC) failed, the assessment is "undefined". An antenna receives a RF signal 1 and pass it to a down conversion unit 2 which convert it to a BB signal 4. The configurable demodulation and detection unit 3 receives the BB signal 4 and performs a cyclic redundancy check (CRC) 29. The result of the CRC 9 controls the configuration control unit 8 and the link control unit 5. The configurable demodulation and detection unit 3 outputs a frequency offset estimation $\tilde{f}(k)$ 11, which is used by the packet assessment unit 7. Said packet assessment unit 7 assesses on the basis of the instantaneous frequency offset estimate 11 and on the comparison of the evaluation value 30 against a threshold T 12 if a received packet is "clean" or "dirty", whereas said assessment result 19 is stored in a memory 14 of the configuration control unit 8 for a specific counter station.

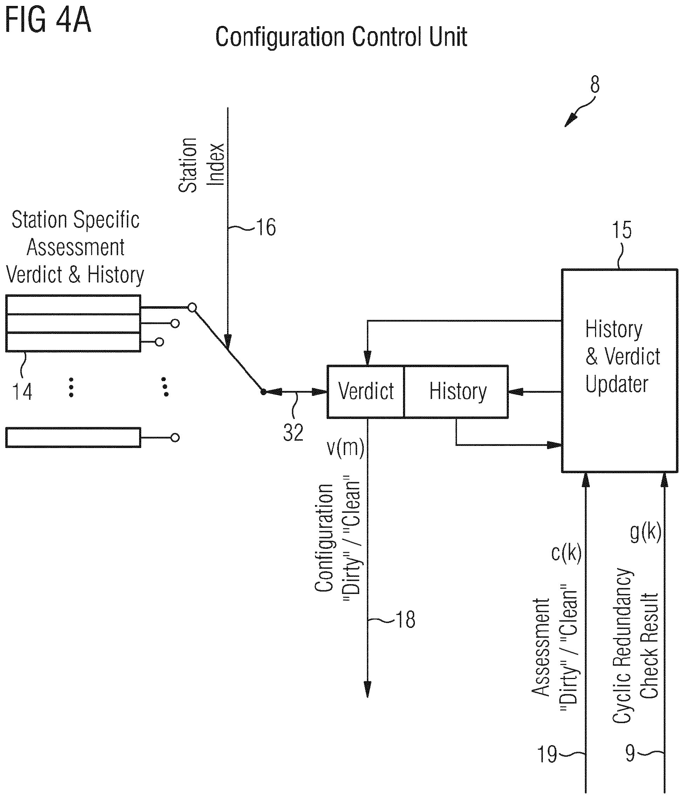

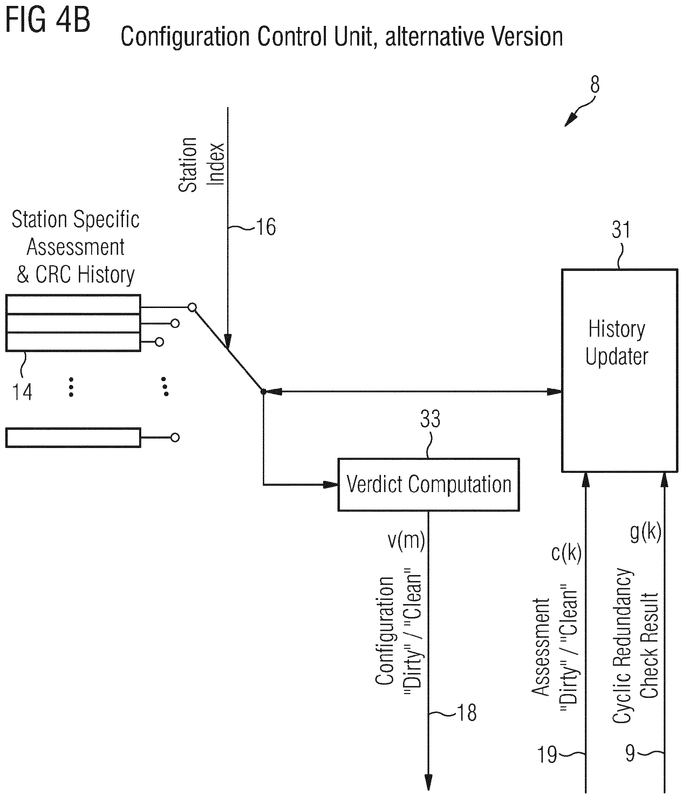

Figures 4 to 6 shows the features of the inventive apparatus in more detail.

Figure 4a shows a first embodiment of the configuration control unit 8. The configuration control unit 8 comprises a memory 14 for storing histories of counter station specific assessments 19, related CRC 9 results and verdicts derived thereof, and it further comprises a history and verdict updater unit 15. The histories are stored in and extracted from the memory 14 via a verdict extraction signal 32. In this first embodiment, the verdict 18 is computed already when feeding in a new assessment after receiving a packet, wherein the verdict per station along with its associated assessment and CRC history is stored under a specific station index 16. The history and verdict updater 15 firstly receives if the CRC of a received packet is passed or failed, using the cyclic redundancy check result $g(k)$ 9 and the assessment result $c(k)$ 19. The packet assessment unit 7 outputs the verdict $v(m)$ whether a received packet of a specific counter station is "clean" or "dirty". This is included in the stored history of said specific counter station. Furthermore, the verdict of a specific counter station configures the demodulation and detection unit 3 respectively. Hence, the verdict computation in the first embodiment of the configuration control unit is performed after receiving a packet by including the new assessment and CRC.

In a second embodiment of the configuration control unit 8 shown in fig. 4b the verdict 18 is computed by a verdict computation unit 33 when configuring a packet to be received and only the assessment CRC history is stored in the memory 14. Hence, the verdict computation in the second embodiment of the configuration control unit is performed just before configuring a packet to be received.

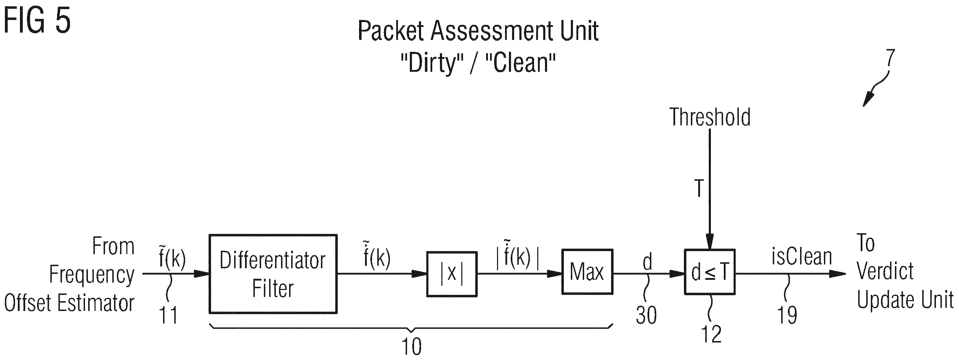

Figure 5 shows a first embodiment of the packet assessment unit 7. The instantaneous frequency offset estimates 11 are fed into a drift estimator comprising a differentiator filter. It determines the maximum of the absolute drift across the received packet, which is used as an evaluation value $d$ and compares $d$ against a threshold 12. The threshold detection 12 classifies the received packet as "dirty" when exceeding the threshold, otherwise it is regarded as a "clean" packet and pass the result to the history and verdict updater 15 or the history updater 31 of the configuration control unit 8.

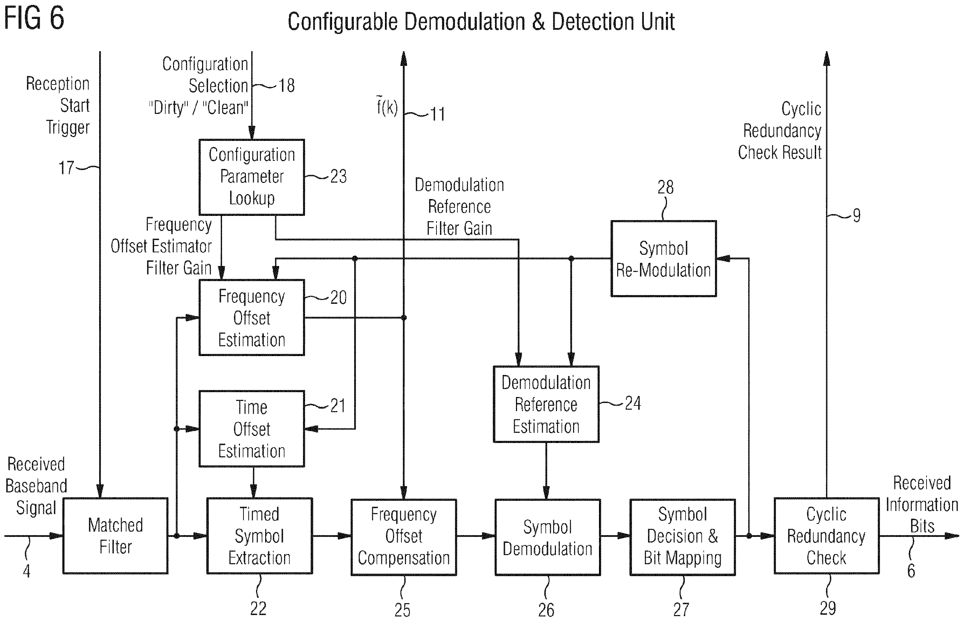

Figure 6 shows the configurable demodulation and detection unit 3 in more detail by an underlying DPSK receiver for Bluetooth Enhanced Data Rate modes, whereas the configurable receive path includes configurable low pass filtering in the instantaneous frequency offset estimator as well as configurable low pass filtering of the demodulation reference symbol. Filter bandwidths are configured wide in case of the "dirty" configuration and narrow in case of the "clean" configuration. When the demodulation and detection unit 3 is triggered 17 by the link control unit 5, it starts to analyze said received BB-signal 4. Firstly, it performs a frequency-offset estimation 20, a time-offset estimation 21 and a time-controlled symbol extraction 22. The frequency- and time-offset estimation are performed in dependence of the selected configuration parameter lookup 23, which is previously selected and influenced by the configuration selection signal 18 of the configuration control unit 8 if a counter station is assumed to be "dirty" or "clean". In dependence of the selected configuration parameter mentioned above, a demodulation reference estimation unit 24 is configured to support the symbol demodulation 26 for the symbol decision and bit mapping 27, which is needed for the CRC 29 as well as for the symbol re-modulation 28. This result in turn is inputted to the frequency- 20 and time- 21 offset estimation and the demodulation reference estimation 24. The result of the frequency-offset estimation $\tilde{f}(k)$ 11 is used for the frequency-offset compensation 25 and is also used in the packet assessment unit 7 for determining if a received packet of a specific counter station is "dirty" or "clean". This result 19 is stored in a memory 14 of the configuration control unit 8. The result of the CRC controls the configuration control unit 8 and the link control unit 7.

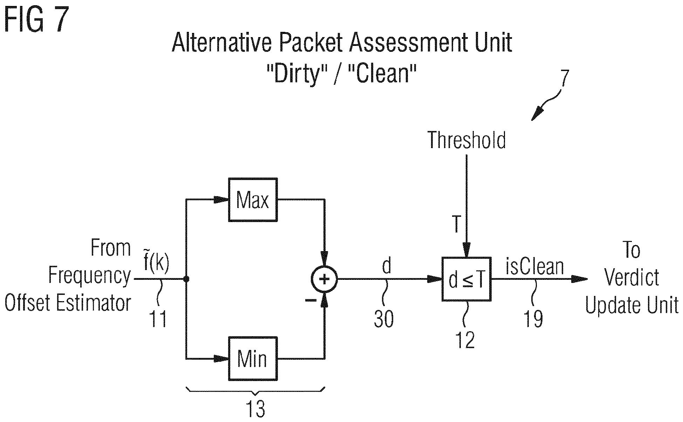

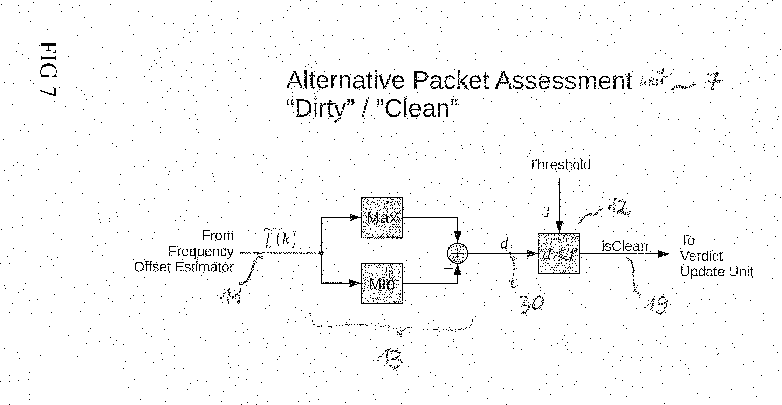

Figure 7 shows a second embodiment of the packet assessment unit 7. The drift estimation 10 is replaced by a peak-to-peak frequency offset variation span estimation 13, which outputs an evaluation value $d$.

## List of Reference Signs

| | |
|---|---|
| 1 | Received Radio Frequency Signal, RF-signal |
| 2 | Down conversion unit |
| 3 | Demodulation and detection unit |
| 4 | Received baseband signal, BB-signal |
| 5 | Link control unit |
| 6 | Received information bits |
| 7 | Packet assessment unit |
| 8 | Configuration control unit |
| 9 | Cyclic redundancy check (CRC) result |
| 10 | Drift estimator |
| 11 | Instantaneous frequency offset estimate |
| 12 | Threshold detection |
| 13 | Peak-to-peak frequency offset variation span estimation |
| 14 | Memory |
| 15 | History and verdict updater unit |
| 16 | Station index |
| 17 | Trigger |

18    Configuration selection Signal for the demodulation and detection unit; verdict
19    Assessment result signal for the configuration control unit
20    Frequency-offset estimation
21    Time-offset estimation
22    Timed symbol extraction
23    Configuration parameter lookup
24    Configurable demodulation reference estimation
25    Frequency-offset compensation
26    Symbol demodulation
27    Symbol decision and bit mapping
28    Symbol re-modulation
29    Cyclic Redundancy Check
30    Assessment value after assessing the instantaneous frequency offset estimate
31    History updater
32    verdict extraction signal
33    Verdict computation unit

**Claims**

1. An apparatus for maximization of data throughput for Bluetooth or Bluetooth Low Energy in dependence of the performance of a transmitter of a counter station, the apparatus is configured to receive a radio frequency signal (1), RF signal, comprising means (2) to down convert the RF signal (1) to a baseband signal (4), BB signal, a demodulation and detection unit (3) configured to demodulate and detect received information bits of the BB signal (4) and a link control unit (5) configured to control communication link specific parameters and to feed the received information bits to higher layers, **characterized in, that** the demodulation and detection unit (3) is configurable and configured to adapt filter bandwidths according to a time-varying instantaneous frequency offset estimation of the BB signal $r(t)$ and the apparatus further comprising a packet assessment unit (7) configured to classify a packet received from the BB signal and detected and demodulated by the demodulation and detection unit (3) as dirty or clean (19) by comparing an evaluation value $d$ (30) obtained from instantaneous frequency offset estimates $\widetilde{f(k)}$ (11) during reception of the packet against a threshold $T$ (12) and a configuration control unit (8) configured to maintain an assessment history respectively per counter station connected with the apparatus in respective communication links and to convert said history into a verdict $v$ (18) on whether a specific counter station transmits packets regarded as clean or dirty, whereas said verdict controls the configurable demodulation and detection unit (3) when receiving a packet from a specific counter station.

2. The apparatus according to claim 1, **characterized in, that** the configurable demodulation and detection unit (3) outputs a cyclic redundancy check (29), CRC, result (9) to the configuration control unit (8) and the link control unit (5) and outputs received information bits (6) to the link control unit (5).

3. The apparatus according to claim 1, **characterized in, that** the packet assessment unit (7) comprises a drift estimation unit (10) configured to determine a maximum of an absolute drift across the packet received from the BB-Signal (4) and to compare it (30) against the threshold $T$ (12).

4. The apparatus according to claim 1, **characterized in, that** the packet assessment unit (7) comprises means (13) for peak-to-peak frequency offset variation span estimation $d$ and configured to compare $d$ (30) against the threshold $T$ (12).

5. The apparatus according to claim 1, **characterized in, that** the configuration control unit (8) comprises a memory (14) for storing histories of counter station specific assessments (19), related CRC results (9) and verdicts derived thereof, a history and verdict updater (15) configured to derive the verdict (18) of a specific counter station from the stored history and the assessment and CRC result of the most recently received packet of said specific counter station and to configure the demodulation and detection unit (3) respectively.

6. The apparatus according to claim 1, **characterized in, that** the configuration control unit (8) comprises a memory (14) for storing histories of counter station specific assessment CRC results (9), a history updater (31) configured to derive the CRC result of the specific counter station from the stored histories and a verdict computation unit (33) configured to compute the verdict (18) of a specific counter station when configuring the packet of a specific counter station is being received and to configure the demodulation and detection unit (3) respectively.

7. The apparatus according to claim 1, **characterized in, that** the verdict $v(m)$ is computed by $v(m) =$

$$\begin{cases} 0 & \text{if} \quad 2 \cdot \sum_{k=m-K}^{m-1} c(k) < \sum_{k=m-K}^{m-1} g(k) \quad or \quad \sum_{k=m-K}^{m-1} g(k) = 0 \\ 1 & \text{if} \quad 2 \cdot \sum_{k=m-K}^{m-1} c(k) \geq \sum_{k=m-K}^{m-1} g(k) \end{cases}$$

, with $m$ being the index of the next packet to be received from a specific counter station, $c(k)$ is the assessment of received packets as clean or dirty and $g(k)$ is the cyclic redundancy check result, where index $k$ ranges over the last $K$ packets received from the counter station, with $K>0$.

8. The apparatus according to claim 1, **characterized in, that** if the evaluation value $d$ (30) exceeds threshold $T$ (12) the transmitted packet is defined as dirty, and if the evaluation value (30) does not exceeds threshold $T$ the transmitted packet is defined as clean.

9. The apparatus according to claim 1, **characterized in, that** the verdict $v(m)$ is defined as dirty for the case when the entire history of packets received by the apparatus from a counter station has been assessed undefined or for any unknown counter station.

10. A method for maximization of data throughput for Bluetooth or Bluetooth Low Energy in dependence of the performance of the transmitter of a counter station performed by an apparatus, the method comprising the following steps:

   - receiving a radio frequency, RF, signal (1) from a counter station,
   - down-converting the RF-signal (1) to a BB-signal $r(t)$ (4) and inputting it to a configurable demodulation and detection unit (3), whereas the demodulation and detection unit (3) is configured by a configuration control unit (8) and triggered by a link control unit (5),
   - calculating (29) and outputting a cyclic redundancy check, CRC, result (9) to the link control unit (5) and the configuration control unit (8),
   - outputting an instantaneous frequency-offset estimate $\widetilde{f(k)}$ (11) to a packet assessment unit (7) by the demodulation and detection unit (3),
   - assessing a packet received from the BB-signal as dirty or clean by evaluating the observed instantaneous frequency offset $\widetilde{f(k)}$ and comparing the evaluation value $d$ (30) against a threshold $T$ (12) by the packet assessment unit (7), distinguishing clean packets with sufficiently stable radio frequency of the counter station transmitter and dirty packets exhibiting excessive variation of the transmitting counter station radio frequency, and
   - maintaining (14) an assessment history of each counter station connected with the apparatus and converting said assessment history into a verdict $v$ on whether a specific counter station transmits packets regarded as clean or dirty, whereas said verdict is used to control the demodulation and detection unit when receiving a packet from a counter station according to a station index (16) of the link control unit (5), by the configuration control unit (8) .

**Patentansprüche**

1. Vorrichtung zur Maximierung des Datendurchsatzes für Bluetooth oder Bluetooth Low Energy in Abhängigkeit von der Leistung eines Senders einer Gegenstation, wobei die Vorrichtung dafür ausgelegt ist, ein Hochfrequenzsignal (1), RF-Signal, zu empfangen, umfassend Mittel (2) zum Abwärtswandeln des RF-Signals (1) in ein Basisbandsignal (4), BB-Signal, eine Demodulations- und Erfassungseinheit (3), die dafür ausgelegt ist, empfangene Informationsbits des BB-Signals (4) zu demodulieren und zu erfassen, und eine Verbindungssteuereinheit (5), die dafür ausgelegt ist, kommunikationsverbindungsspezifische Parameter zu steuern und die empfangenen Informationsbits an höhere Schichten weiterzuleiten, **dadurch gekennzeichnet, dass** die Demodulations- und Erfassungseinheit (3) auslegbar ist und dafür ausgelegt ist, Filterbandbreiten gemäß einer zeitlich variierenden Schätzung des momentanen Frequenzversatzes des BB-Signals r(t) einzustellen, und die Vorrichtung ferner eine Paketbewertungseinheit (7) umfasst, die dafür ausgelegt ist, ein Paket, das aus dem BB-Signal empfangen und von der Demodulations- und Erfassungseinheit (3) erfasst und demoduliert wird, als schmutzig oder sauber (19) zu klassifizieren, indem ein Beurteilungswert d (30), der aus Schätzungen des momentanen Frequenzversatzes $\widetilde{f(k)}$ (11) während des Empfangs des Pakets mit einem Schwellenwert T (12) verglichen wird, und eine Auslegungssteuereinheit (8) umfasst, die dafür ausgelegt ist, jeweils eine Bewertungshistorie pro Gegenstation, die mit der Vorrichtung über entsprechende Kommunikationsverbindungen verbunden ist, zu führen und diese Historie in ein Urteil v (18) darüber umzuwandeln, ob eine spezifische Gegenstation als sauber oder schmutzig betrachtete Pakete sendet, wobei das Urteil die auslegbare Demodulations- und Erfassungseinheit (3) steuert, wenn ein Paket von einer spezifischen Gegenstation empfangen wird.

2. Vorrichtung nach Anspruch 1, **dadurch gekennzeichnet, dass** die auslegbare Demodulations- und Erfassungseinheit (3) ein Ergebnis (9) einer zyklischen Redundanzprüfung (29), CRC, an die Auslegungssteuereinheit (8) und die Verbindungssteuereinheit (5) ausgibt und empfangene Informationsbits (6) an die Verbindungssteuereinheit (5) ausgibt.

3. Vorrichtung nach Anspruch 1, **dadurch gekennzeichnet, dass** die Paketbewertungseinheit (7) eine Driftschätzungseinheit (10) umfasst, die dafür ausgelegt ist, ein Maximum einer absoluten Drift über das aus dem BB-Signal (4) empfangene Paket zu bestimmen und es (30) mit dem Schwellenwert $T$ (12) zu vergleichen.

4. Vorrichtung nach Anspruch 1, **dadurch gekennzeichnet, dass** die Paketbewertungseinheit (7) Mittel (13) zur Schätzung der Spitze-Spitze-Frequenzversatzvariationsspanne $d$ umfasst und dafür ausgelegt ist, $d$ (30) mit dem Schwellenwert $T$ (12) zu vergleichen.

5. Vorrichtung nach Anspruch 1, **dadurch gekennzeichnet, dass** die Auslegungssteuereinheit (8) einen Speicher (14) zum Speichern von Historien von gegenstationsspezifischen Bewertungen (19), zugehörigen CRC-Ergebnissen (9) und daraus abgeleiteten Urteilen, einen Historien- und Urteilsaktualisierer (15), der dafür ausgelegt ist, das Urteil (18) einer spezifischen Gegenstation aus der gespeicherten Historie und der Bewertung und dem CRC-Ergebnis des zuletzt empfangenen Pakets der spezifischen Gegenstation abzuleiten und jeweils die Demodulations- und Erfassungseinheit (3) auszulegen, umfasst.

6. Vorrichtung nach Anspruch 1, **dadurch gekennzeichnet, dass** die Auslegungssteuereinheit (8) einen Speicher (14) zum Speichern von Historien von gegenstationsspezifischen CRC-Ergebnissen (9) von Bewertungen, einen Historienaktualisierer (31), der dafür ausgelegt ist, das CRC-Ergebnis der spezifischen Gegenstation aus den gespeicherten Historien abzuleiten, und eine Urteilsberechnungseinheit (33) umfasst, die dafür ausgelegt ist, das Urteil (18) einer spezifischen Gegenstation zu berechnen, wenn beim Auslegen das Paket einer spezifischen Gegenstation empfangen wird, und die Demodulations- und Erfassungseinheit (3) jeweils auszulegen.

7. Vorrichtung nach Anspruch 1, **dadurch gekennzeichnet, dass** das Urteil v (m) berechnet wird durch:

$$v(m) = \begin{cases} 0 \text{ wenn } 2 \cdot \sum_{k=m-K}^{m-1} c(k) < \sum_{k=m-K}^{m-1} g(k) \text{ oder } \sum_{k=m-K}^{m-1} g(k) = 0 \\ 1 \text{ wenn } 2 \cdot \sum_{k=m-K}^{m-1} c(k) \geq \sum_{k=m-K}^{m-1} g(k) \end{cases},$$

wobei m der Index des nächsten von einer spezifischen Gegenstation zu empfangenden Pakets ist, $c(k)$ die Bewertung von empfangenen Paketen als sauber oder schmutzig ist und $g(k)$ das Ergebnis der zyklischen Redundanzprüfung ist, wobei der Index $k$ über die letzten $K$ von der Gegenstation empfangenen Pakete reicht, mit $K>0$.

8. Vorrichtung nach Anspruch 1, **dadurch gekennzeichnet, dass**, wenn der Beurteilungswert $d$ (30) den Schwellenwert $T$ (12) überschreitet, das gesendete Paket als schmutzig definiert wird, und wenn der Beurteilungswert (30) den Schwellenwert $T$ nicht überschreitet, das gesendete Paket als sauber definiert wird.

9. Vorrichtung nach Anspruch 1, **dadurch gekennzeichnet, dass** das Urteil $v(m)$ als schmutzig definiert wird für den Fall, dass die gesamte Historie von Paketen, die von der Vorrichtung von einer Gegenstation empfangen wurden, als undefiniert bewertet wurde, oder für jegliche unbekannte Gegenstation.

10. Verfahren zur Maximierung des Datendurchsatzes für Bluetooth oder Bluetooth Low Energy in Abhängigkeit von der Leistung des Senders einer Gegenstation, das von einer Vorrichtung durchgeführt wird, wobei das Verfahren die folgenden Schritte umfasst:

- Empfangen eines Hochfrequenz-, RF-, Signals (1) von einer Gegenstation,
- Abwärtswandeln des HF-Signals (1) in ein BB-Signal $r(t)$ (4) und Eingeben desselben in eine auslegbare Demodulations- und Erfassungseinheit (3), wobei die Demodulations- und Erfassungseinheit (3) durch eine Auslegungssteuereinheit (8) ausgelegt wird und durch eine Verbindungssteuereinheit (5) angesteuert wird,
- Berechnen (29) und Ausgeben eines Ergebnisses (9) einer zyklischen Redundanzprüfung, CRC, an die Verbindungssteuereinheit (5) und die Auslegungssteuereinheit (8),

- Ausgeben einer Schätzung (11) des momentanen Frequenzversatzes $\widetilde{f(k)}$ an eine Paketbewertungseinheit (7) durch die Demodulations- und Erfassungseinheit (3),
- Bewerten eines aus dem BB-Signal empfangenen Pakets als schmutzig oder sauber durch Auswerten des

beobachteten momentanen Frequenzversatzes $\widetilde{f(k)}$ und Vergleichen des Beurteilungswertes $d$ (30) mit einem Schwellenwert $T$ (12) durch die Paketbewertungseinheit (7), Unterscheiden von sauberen Paketen mit ausreichend stabiler Funkfrequenz des Senders der Gegenstation und schmutzigen Paketen, die übermäßige Variation der Sendefunkfrequenz der Gegenstation aufweisen, und
- Führen (14) einer Bewertungshistorie jeder mit der Vorrichtung verbundenen Gegenstation und Umwandeln der Bewertungshistorie in ein Urteil darüber, ob eine spezifische Gegenstation Pakete sendet, die als sauber oder schmutzig angesehen werden, wobei das Urteil zum Steuern der Demodulations- und Erfassungseinheit verwendet wird, wenn ein Paket von einer Gegenstation gemäß einem Stationsindex (16) der Verbindungssteuereinheit (5) empfangen wird, durch die Auslegungssteuereinheit (8).

## Revendications

1. Appareil permettant de maximaliser le débit de données pour Bluetooth ou Bluetooth Low Energy en fonction des performances d'un émetteur d'une station antagoniste, l'appareil est configuré pour recevoir un signal radiofréquence (1), signal RF, comprenant des moyens (2) pour abaisser le signal RF (1) en un signal en bande de base (4), BB Signal, une unité (3) de démodulation et de détection configurée pour démoduler et détecter les bits d'information reçus du signal BB (4) et une unité (5) de commande de liaison configurée pour commander des paramètres spécifiques de liaison de communication et pour fournir les bits d'information reçus à des couches supérieures, **caractérisé en ce que** l'unité (3) de démodulation et de détection est configurable et configurée pour adapter des bandes passantes de filtre en fonction d'une estimation de décalage de fréquence instantané variant dans le temps du signal BB $r(t)$ et l'appareil comprenant en outre une unité (7) d'évaluation de paquets configurée pour classer un paquet reçu à partir du signal BB et détecté et démodulé par l'unité (3) de démodulation et de détection comme sale ou propre (19) en comparant une valeur d'évaluation $d$ (30) obtenue à partir d'estimations instantanées de

décalage de fréquence $\widetilde{f(k)}$ (11) lors de la réception du paquet à un seuil $T$ (12), et une unité (8) de commande de configuration configurée pour maintenir un historique d'évaluation respectivement par station antagoniste connectée à l'appareil dans des liaisons de communication respectives et pour convertir ledit historique en un verdict $v$ (18) indiquant si une station antagoniste spécifique transmet des paquets considérés comme propres ou sales, tandis que ledit verdict commande l'unité configurable (3) de démodulation et de détection lors de la réception d'un paquet provenant d'une station antagoniste spécifique.

2. Appareil selon la revendication 1, **caractérisé en ce que** l'unité configurable (3) de démodulation et de détection délivre un résultat (9) de contrôle (29) de redondance cyclique, CRC, à l'unité (8) de commande de configuration et à l'unité (5) de commande de liaison et délivre les bits d'information reçus (6) à l'unité (5) de commande de liaison.

3. Appareil selon la revendication 1, **caractérisé en ce que** l'unité (7) d'évaluation de paquets comprend une unité (10) d'estimation de dérive configurée pour déterminer un maximum d'une dérive absolue à travers le paquet reçu depuis le signal BB (4) et pour le comparer (30) au seuil $T$ (12).

4. Appareil selon la revendication 1, **caractérisé en ce que** l'unité (7) d'évaluation de paquets comprend des moyens (13) d'estimation d'étendue de variation de décalage de fréquence crête à crête $d$ et configurée pour comparer d (30) au seuil $T$ (12).

**5.** Appareil selon la revendication 1, **caractérisé en ce que** l'unité (8) de commande de configuration comprend une mémoire (14) pour stocker des historiques d'évaluations spécifiques (19) de station antagoniste, des résultats CRC associés (9) et des verdicts déduits de ceux-ci, un dispositif (15) de mise à jour d'historiques et de verdicts configuré pour déduire le verdict (18) d'une station antagoniste spécifique à partir de l'historique stocké et de l'évaluation et du résultat CRC du paquet le plus récemment reçu de ladite station antagoniste spécifique et pour configurer l'unité (3) de démodulation et de détection respectivement.

**6.** Appareil selon la revendication 1, **caractérisé en ce que** l'unité (8) de commande de configuration comprend une mémoire (14) pour stocker des historiques de résultats CRC d'évaluation (9) spécifiques à une station antagoniste, un dispositif (31) de mise à jour d'historiques configuré pour déduire le résultat CRC de la station antagoniste spécifique à partir des historiques stockés et une unité (33) de calcul de verdict configurée pour calculer le verdict (18) d'une station antagoniste spécifique lors de la réception de la configuration du paquet d'une station antagoniste spécifique et pour configurer l'unité (3) de détection et de démodulation respectivement.

**7.** Appareil selon la revendication 1, **caractérisé en ce que** le verdict $v(m)$ est calculé par $v(m)$ =

$$\begin{cases} 0 & \text{si } 2 \cdot \sum_{k=m-K}^{m-1} c(k) < \sum_{k=m-K}^{m-1} g(k) \text{ ou } \sum_{k=m-K}^{m-1} g(k) = 0 \\ 1 & \text{si } 2 \cdot \sum_{k=m-K}^{m-1} c(k) \geq \sum_{k=m-K}^{m-1} g(k) \end{cases}$$

, avec $m$ étant l'index du prochain paquet à recevoir depuis une station antagoniste spécifique, $c(k)$ étant l'évaluation des paquets reçus comme étant propres ou sales et $g(k)$ étant le résultat du contrôle de redondance cyclique, l'index $k$ s'étendant sur les $K$ derniers paquets reçus en provenance de la station antagoniste, avec $K>0$.

**8.** Appareil selon la revendication 1, **caractérisé en ce que** si la valeur d'évaluation $d$ (30) dépasse le seuil $T$ (12) le paquet transmis est défini comme sale, et, si la valeur d'évaluation (30) ne dépasse pas le seuil $T$, le paquet transmis est défini comme propre.

**9.** Appareil selon la revendication 1, **caractérisé en ce que** le verdict $v(m)$ est défini comme sale pour le cas où l'historique complet des paquets reçus par l'appareil depuis une station antagoniste a été évalué comme étant indéfini ou pour toute station antagoniste inconnue.

**10.** Procédé permettant de maximiser le débit de données pour Bluetooth ou Bluetooth Low Energy en fonction des performances de l'émetteur d'une station antagoniste mis en œuvre par un appareil, le procédé comprenant les étapes suivantes :

- réception d'un signal radiofréquence RF (1) en provenance d'une station antagoniste,
- abaissement du signal RF (1) en un signal BB $r(t)$ (4) et entrée de celui-ci dans une unité configurable (3) de démodulation et de détection, alors que l'unité (3) de démodulation et de détection est configurée par une unité (8) de commande de configuration et est déclenchée par une unité (5) de commande de liaison,
- calcul (29) et délivrance d'un résultat (9) de contrôle de redondance cyclique, CRC, à l'unité (5) de commande de liaison et l'unité (8) de commande de configuration,
- délivrance d'une estimation de décalage de fréquence instantanée $\widetilde{f(k)}$ (11) à une unité (7) d'évaluation de paquets par l'unité (3) de démodulation et de détection,
- évaluation d'un paquet reçu depuis le signal BB comme étant sale ou propre en évaluant le décalage de fréquence instantané observé $\widetilde{f(k)}$ et en comparant la valeur d'évaluation $d$ (30) à un seuil $T$ (12) par l'unité (7) d'évaluation de paquet, en distinguant les paquets propres avec une fréquence radio suffisamment stable de l'émetteur de la station antagoniste et des paquets sales présentant une variation excessive de la fréquence radio de la station antagoniste émettrice, et
- conservation (14) d'un historique d'évaluation de chaque station antagoniste connectée à l'appareil et conversion dudit historique d'évaluation en un verdict $v$ selon qu'une station antagoniste spécifique transmet des paquets considérés comme étant propres ou sales, tandis que ledit verdict est utilisé pour commander l'unité de démodulation et de détection lors de la réception d'un paquet provenant d'une station antagoniste selon un index de station (16) de l'unité (5) de commande de liaison, par l'unité (8) de commande de configuration.

FIG 1       Prior Art Packet Receiver

To Higher Layers

5

**Link Control**

Antenna

1

Received Radio Frequency Signal

Trigger ~17

Cyclic Redundancy Check Result

Received Information Bits

2

**Down Conversion**

4

r(t)

Received Baseband Signal

3

**Demodulation & Detection**

9

6

FIG 2       Received Packets Schedule Example

Time slot boundaries

Packets sent by respective labelled terminals

A    B       A   C    B

Time

FIG 3      New Art Packet Receiver

FIG 4A

Configuration Control Unit

8

Station Specific
Assessment
Verdict & History

Station
Index

~16

15

14

32

Verdict | History

History
& Verdict
Updater

v(m)

Configuration
"Dirty" / "Clean"

~18

Assessment
"Dirty" / "Clean"

c(k)

Cyclic Redundancy
Check Result

g(k)

19~

9~

# FIG 4B

Configuration Control Unit, alternative Version

# FIG 5

Packet Assessment Unit
"Dirty" / "Clean"

From Frequency Offset Estimator — $\tilde{f}(k)$ (11) → [ Differentiator Filter ] → $\dot{\tilde{f}}(k)$ → [ |x| ] → $|\dot{\tilde{f}}(k)|$ → [ Max ] → d (30) → [ d ≤ T ] (12) → isClean (19) → To Verdict Update Unit

Threshold → T → [ d ≤ T ]

10

7

**FIG 6**  Configurable Demodulation & Detection Unit

EP 4 092 979 B1

FIG 7

Alternative Packet Assessment Unit
"Dirty" / "Clean"                    7

Threshold

Max

From
Frequency —— $\tilde{f}(k)$
Offset Estimator      11

$+$
$-$

Min

13

d              $d \leq T$   isClean

30              12      19

T

To
Verdict
Update Unit

FIG 7

## Alternative Packet Assessment unit ~ 7
## "Dirty" / "Clean"

From Frequency Offset Estimator — 11 — $\widetilde{f}(k)$ — [Max] [Min] — 13 — $+$ / $-$ — $d$ — 30 — Threshold $T$ — $d \leqslant T$ — 12 — isClean — 19 — To Verdict Update Unit

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 10389486 B1, LI YAN

- US 9722845 B2

**Non-patent literature cited in the description**

- Bluetooth Core Specification, Rev 5.2. Bluetooth Special Interest Group, 31 December 2019

- Radio Frequency Bluetooth Test Suite, Rev. RF.TS.p30. Bluetooth Special Interest Group, 27 January 2020